# FASCICULE DE BREVET EUROPEEN

(11) **EP 2 369 701 B1**
(45) Date de publication et mention de la délivrance du brevet: **24.07.2013**
(21) Numéro de dépôt: 11290128.5
(22) Date de dépôt: 11.03.2011
(51) Int. Cl.: H02B 1/42

(54) **Coffret ou tableau de distribution électrique, équipé de supports de rail à liaison pivot simple**
Elektrischer Verteiler- oder Schaltkasten
Power distribution box or panel

(30) Priorité: 22.03.2010 FR 1001121
(43) Date de publication de la demande: 28.09.2011
(73) Titulaire: Legrand France, 87000 Limoges (FR)
(72) Inventeur: Baudou, Alain, 87000 Limoges (FR); Normand, Romain, 87000 Limoges (FR); Sonnet, Olivier, 87270 Bonnac-la-Côte (FR)
(74) Mandataire: Orsini, Fabienne

(56) Documents cités:
- EP-A1- 1 615 308
- DE-U- 1 993 996

## Description

La présente invention concerne de manière générale la distribution de courant électrique dans un bâtiment.

Elle concerne plus particulièrement un coffret ou tableau de distribution électrique tel que défini dans le préambule de la revendication 1.

### ARRIERE-PLAN TECHNOLOGIQUE

Dans les coffrets et tableaux de distribution électrique du type précité, il est généralement prévu au moins deux rails de montage positionnés parallèlement et à distance l'un de l'autre pour porter des appareillages électriques modulaires sur deux rangées d'appareillages espacées l'une de l'autre.

Les entrées de conducteurs électriques des appareillages électriques modulaires de l'une des rangées sont alors tournées vers l'autre rangée. Or, la distance laissée libre entre les deux rangées est généralement réduite, de l'ordre de 40 à 90 millimètres.

Par conséquent, ces entrées de conducteurs électriques sont non seulement difficilement visualisables, mais en outre difficilement accessibles lorsque l'on souhaite y brancher des conducteurs électriques relativement rigides. Le branchement des conducteurs électriques dans les appareillages électriques modulaires s'avérant dès lors complexe à réaliser, la connexion électrique qui en résulte est souvent de piètre qualité et génère des pertes résistives et des échauffements importants.

Une solution connue pour faciliter le branchement des conducteurs électriques consiste alors à monter chaque rail de montage de manière mobile dans le coffret ou tableau de distribution électrique, par exemple au moyen de deux supports de rail du type précité.

On connaît en particulier du document EP 1 615 308 un support de rail qui se présente sous la forme d'un profilé de section en U, à engager sur un longeron du châssis du coffret ou tableau de distribution électrique. La partie centrale de la face avant de ce profilé forme la plate-forme d'accueil du rail de montage tandis que l'une des extrémités de ce profilé est articulée sur le longeron correspondant. De cette manière, le rail de montage est monté mobile sur le châssis suivant une trajectoire en arc-de-cercle.

Grâce à cette mobilité, le rail de montage peut être écarté du rail de montage voisin, ce qui facilite l'accès aux entrées des appareillages électriques modulaires portés par ce rail de montage voisin.

L'inconvénient de ce support de rail est que son utilisation ne permet pas de dégager directement les entrées des appareillages électriques modulaires du rail de montage qu'il supporte. Par conséquent, lorsque ce rail de montage est positionné à proximité d'une paroi du coffret ou tableau de distribution électrique, rien ne permet de faciliter l'accès aux entrées des appareillages électriques modulaires qu'il porte.

Par ailleurs, la trajectoire en arc de cercle du rail de montage nécessite un dégagement important pour faire pivoter les appareillages électriques modulaires, ce qui est incompatible avec l'objectif recherché de réduction du volume des coffrets et tableaux de distribution électrique. Cette trajectoire en arc de cercle nécessite en outre l'utilisation d'un câble d'alimentation électrique des appareillages électriques modulaires de longueur suffisante pour ne pas bloquer cette mobilité, ce qui est également incompatible avec le volume réduit qu'offrent les coffrets et tableaux de distribution électrique pour loger ce câble d'alimentation.

On connaît également du document DE 1 993 996 un coffret de distribution électrique comportant :
- un châssis avec un fond et quatre parois latérales, dont deux parois latérales en vis-à-vis portant deux pions,
- un rail de montage d'appareillage électrique modulaires, et
- deux supports de rail en forme de L, avec une partie qui forme une plate-forme d'accueil d'une extrémité du rail, et une autre partie qui est monté mobile à rotation sur le pion porté par la paroi latérale correspondante du châssis.

Dans ce document, les opérations d'assemblage du coffret et de basculement du rail nécessitent l'utilisation de tournevis.

L'opération de montage nécessite en particulier de visser le rail de montage sur les supports alors que ces derniers sont déjà en place sur les pions des parois latérales du châssis, ce qui s'avère en pratique malcommode.

L'inclinaison du rail est par ailleurs peu aisée puisqu'elle nécessite de dévisser une vis difficile d'accès.

### OBJET DE L'INVENTION

Afin de remédier aux inconvénients précités de l'état de la technique, l'invention propose un nouveau coffret ou tableau de distribution électrique qui facilite le montage et le branchement des appareillages électriques modulaires.

Plus particulièrement, l'invention propose un coffret ou tableau de distribution électrique tel que défini dans la revendication 1.

Dans cette revendication, l'expression « pivot simple » est utilisée par opposition à « pivot glissant ». Le pivot est donc libre de tourner autour de l'axe de pivot, mais est bloqué en translation suivant cet axe.

L'axe de ce pivot est ici situé derrière le rail de montage. Il est plus précisément situé à l'arrière du rail de montage, dans l'espace délimité par les deux demi-plans qui s'étendent respectivement à partir des deux bords longitudinaux du rail de montage, perpendiculairement à celui-ci. Cet axe de pivot est préférentiellement situé dans le plan médian du rail de montage.

Ainsi, les pivots permettent au rail de montage de pivoter presque sur place, de manière que son basculement nécessite un dégagement réduit et une longueur de câble d'alimentation réduite.

Plus précisément, lorsque le rail de montage bascule, la position de l'axe de pivot permet à la plate-forme et aux appareillages électriques modulaires de décrire un mouvement en arc de cercle de rayon de courbure réduit. Ainsi, les câbles d'alimentation électrique subissent des contraintes réduites. Il est en outre ainsi possible de faire basculer un rail de montage indépendamment des autres rails de montage, sans que les appareillages électriques modulaires portés par ce rail ne viennent buter contre les appareillages électriques modulaires des autres rails de montage.

Par ailleurs, grâce à l'invention, l'engagement du pivot du support de rail au fond de son logement est facilité par la forme de fourche du logement.

La mise en place du support de rail peut par ailleurs aussi bien être opérée avant ou après que le rail de montage ait été rapporté sur le support de rail.

Les moyens pour verrouiller le basculement du rail de montage en position droite et pour bloquer le pivot du support de rail au fond de son logement sont les mêmes. Ils sont donc plus ergonomiques et plus faciles à manipuler pour l'installateur.

D'autres caractéristiques avantageuses et non limitatives du coffret ou tableau de distribution électrique conforme à l'invention sont définies dans les revendications 2 à 12.

### DESCRIPTION DETAILLEE D'UN EXEMPLE DE REALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un coffret de distribution électrique selon l'invention, sur laquelle apparaît un châssis portant, via trois paires de supports de rail, trois rails de montage d'appareillages électriques modulaires ;
- la figure 2 est une vue schématique de côté du coffret de distribution électrique de la figure 1, dans lequel l'un des rails de montage est en position droite tandis qu'un autre des rails de montage est en position basculée ;
- la figure 3 est une vue schématique éclatée d'un premier mode de réalisation du coffret de distribution électrique selon l'invention ;
- la figure 4 est une vue schématique en perspective d'un montant du châssis du coffret de distribution électrique de la figure 3 ;
- la figure 5 est une vue schématique en perspective d'un support de rail du coffret de distribution électrique de la figure 3 ;
- la figure 6 est une vue schématique éclatée d'un second mode de réalisation du coffret de distribution électrique selon l'invention ;
- la figure 7 est une vue schématique en perspective d'un support de rail du coffret de distribution électrique de la figure 6 ;
- la figure 8 est une vue schématique en perspective d'un montant du châssis du coffret de distribution électrique de la figure 6 ;
- les figures 9 et 10 sont des vues schématiques en coupe d'un rail de montage du coffret de distribution électrique de la figure 6 assemblé au support de rail de la figure 7, représenté sous deux angles différents ;
- la figure 11 est une vue en coupe d'un détail de la figure 10 ;
- les figures 12 et 13 sont des vues schématiques en coupe du rail de montage de la figure 9 et du support de rail de la figure 7, montés en position droite sur le châssis du coffret de distribution électrique de la figure 6 ;
- la figure 14 est une vue schématique en coupe du rail de montage de la figure 9 et du support de rail de la figure 7, montés en position basculée sur le châssis du coffret de distribution électrique de la figure 6 ;
- la figure 15 est une vue schématique éclatée d'un troisième mode de réalisation du coffret de distribution électrique selon l'invention;
- la figure 16 est une vue schématique en coupe du rail de montage et du support de rail montés en position droite sur le châssis du coffret de distribution électrique de la figure 15 ;
- la figure 17 est une vue schématique en coupe du rail de montage et du support de rail montés en position basculée sur le châssis du coffret de distribution électrique de la figure 15 ; et
- la figure 18 est une vue schématique en coupe partielle du rail de montage et du support de rail montés en position basculée sur le châssis du coffret de distribution électrique de la figure 15.

Un coffret ou tableau de distribution électrique est un appareil électrique qui permet, d'une part, de répartir le courant provenant d'un réseau électrique extérieur vers chacun des circuits d'un réseau électrique local d'une habitation, et, d'autre part, de couper l'alimentation de ces circuits en cas de surintensité.

Un tel coffret ou tableau de distribution électrique se présente généralement sous la forme d'un boîtier logeant des appareillages électriques modulaires, tels que des disjoncteurs.

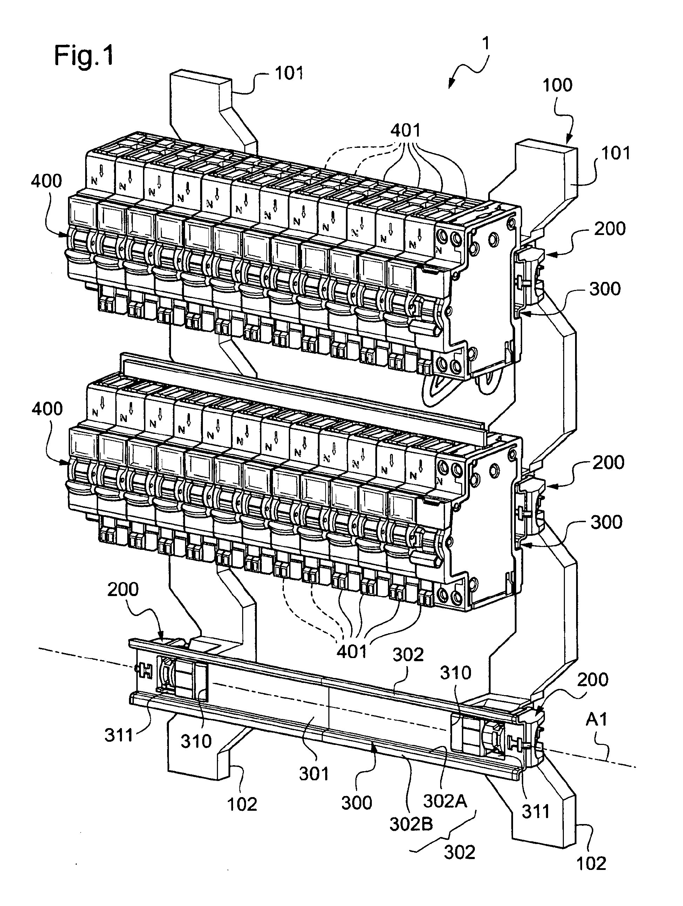

Tel que représenté sur la figure 1, le coffret de distribution électrique 1 comporte à cet effet un châssis 100 à fixer verticalement sur une paroi murale, trois rails de montage 300 à fixer horizontalement sur le châssis pour porter trois rangées 400 de disjoncteurs 401, et un capot de fermeture (non représenté).

En préliminaire, on utilisera dans la description les termes « avant » et « arrière » suivant le sens du regard de l'installateur vers la paroi murale, l'arrière désignant la zone située du côté de cette paroi murale et l'avant désignant la zone située du côté opposé, vers l'installateur. Les termes « intérieur » et « extérieur » seront quant à eux utilisés par rapport au centre du châssis, l'intérieur désignant la zone située du côté du centre du châssis et l'extérieur désignant la zone située du côté opposé.

Le capot de fermeture est conçu pour protéger les disjoncteurs 401. Il comporte à cet effet une paroi avant plane présentant des ouvertures d'accès aux disjoncteurs 401, et une paroi latérale agencée pour se fixer au châssis 100.

Le châssis 100 est ici formé de deux longerons 101 agencés pour être fixés verticalement et côte-à-côte sur la paroi murale, de telle manière que les rails de montage 300 puissent s'étendre horizontalement entre ces deux longerons 101.

Chaque longeron 101 présente une face arrière 102 à appliquer contre la paroi murale et une face avant opposée. Les faces arrière 102 de ces longerons 101 forment alors le fond du châssis 100.

Chaque longeron 101 comporte par ailleurs, à chacune de ses extrémités, une ouverture (non représentée) d'accueil d'une vis de fixation du châssis 100 à la paroi murale.

Chaque longeron 101 est ici formé d'une seule pièce par moulage d'une matière plastique isolante.

En variante, ce châssis pourrait se présenter sous une forme différente, telle que sous la forme d'une plaque rectangulaire présentant quatre ouvertures d'accueil de vis de fixation, respectivement situées à ses quatre coins. Dans cette variante, la face arrière de cette plaque rectangulaire formerait alors le fond du châssis.

Chaque rail de montage 300 se présente ici sous la forme d'un profilé métallique.

Ces rails de montage 300 comportent plus précisément chacun une paroi principale 301 plane et rectangulaire, qui est allongée suivant un axe de montage A1 et qui s'étend, en position d'utilisation, dans un plan parallèle au fond du châssis 100. Les deux bords latéraux de cette paroi principale 301 sont repliés vers l'avant du rail de montage 300 pour former deux ailes latérales 302 présentant chacune une section transversale en L, avec une partie 302A qui s'élève à partir de la paroi principale 301, orthogonalement à celle-ci, et une partie 302B repliée à angle droit vers l'extérieur du rail de montage 300.

Chaque rail de montage 300 est ici formé d'une seule pièce par découpe et pliage d'un feuillard métallique.

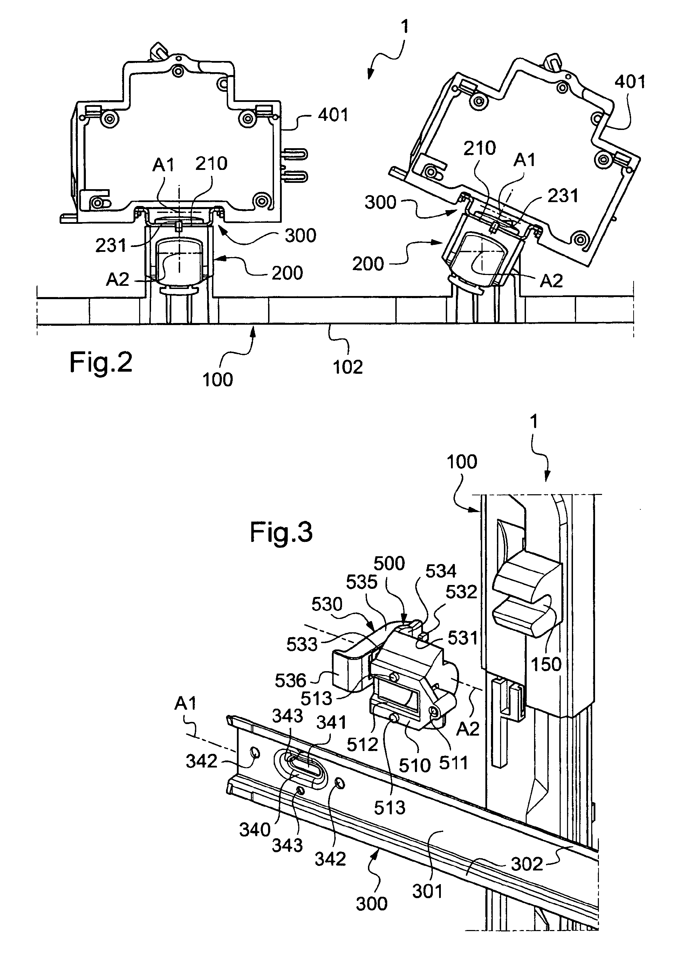

Comme le montrent plus particulièrement les figures 1 et 2, le coffret de distribution électrique 1 comporte en outre trois paires de supports de rail 200 fixés aux longerons 101 du châssis 100 et supportant les extrémités des trois rails de montage 300. Ces supports de rail 200 sont chacun réalisés d'une seule pièce en matière isolante. Ils sont conçus pour supporter l'une des extrémités d'un unique rail de montage et pour lui permettre de basculer, indépendamment des autres rails de montage, autour d'un axe de pivot A2 parallèle à l'axe longitudinal A1 de ce rail de montage. Ainsi basculé, l'accès aux entrées de câble des disjoncteurs 401 est facilité, ce qui simplifie leur branchement.

Sur les figures 3 à 5, 6 à 14 et 15 à 18, on a plus précisément représenté trois modes de réalisation du coffret de distribution électrique 1.

Dans ces trois modes de réalisation, chaque support de rail 500 ; 600 ; 700 comprend une plate-forme 510 ; 610 ; 710 agencée pour retenir une extrémité du rail de montage 300 correspondant (voir figures 3, 6 et 15).

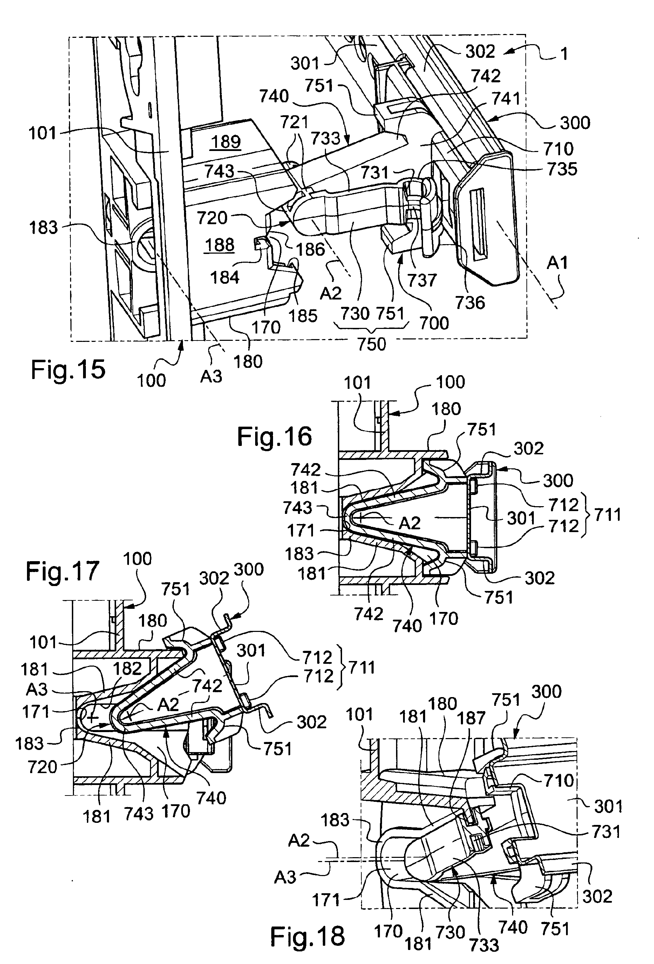

Telle que représentée sur les figures 16, 19 et 29, cette plate-forme 510 ; 610 ; 710 comporte à cet effet des moyens de fixation rigide du rail de montage 300.

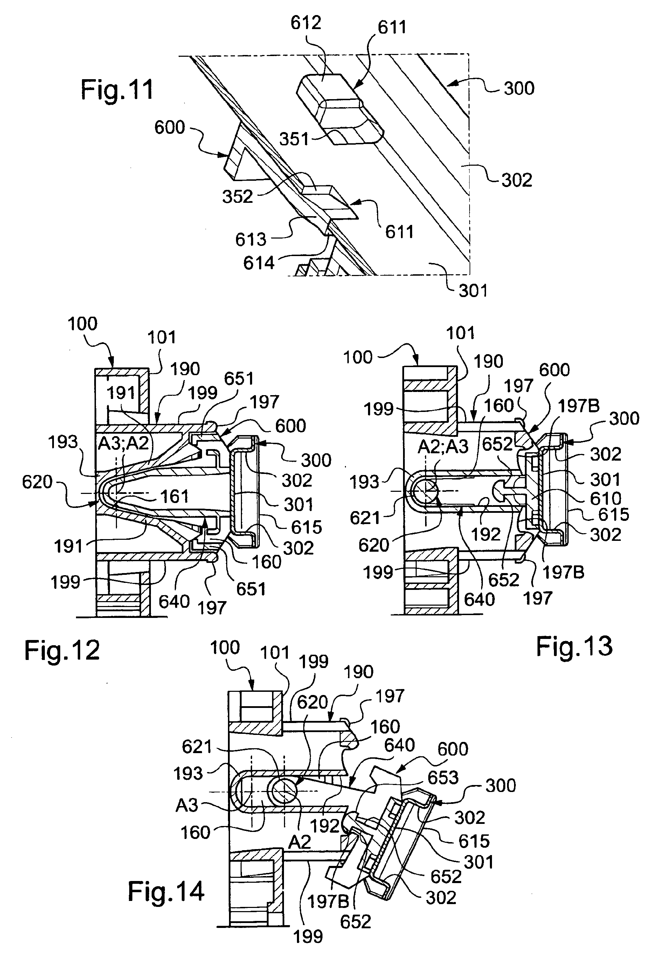

Chaque support de rail 500 ; 600 ; 700 comprend en outre, à l'arrière de cette plate-forme, un pivot 520 ; 620 ; 720 engagé dans un logement 150 ; 160 ; 170 du châssis 100 pour former une articulation permettant à la plate-forme de pivoter par rapport au châssis 100 autour de l'axe de pivot A2. Chaque rail de montage 300 est ainsi libre de pivoter entre une position droite dans laquelle sa paroi principale 301 s'étend sensiblement parallèlement au fond du châssis 100 (figures 12 et 16) et une position basculée dans laquelle sa paroi principale 301 est inclinée par rapport au fond du châssis 100 (figures 14 et 17).

Selon une caractéristique particulièrement avantageuse de l'invention, le logement 150 ; 160 ; 170 du châssis forme une fourche agencée pour accueillir le pivot 520 ; 620 ; 720 du support de rail de manière à former une liaison pivot simple, d'axe de pivot A2 parallèle à l'axe longitudinal A1 du rail de montage 300.

Cette articulation est ainsi conçue pour permettre au support de rail de pivoter par rapport au châssis autour de l'axe de pivot A2 et pour bloquer la mobilité en translation du support de rail par rapport au châssis suivant l'axe de pivot A2.

Cette articulation est en outre conçue pour faciliter le montage du pivot dans son logement, puisque ce pivot est libre de naviguer dans la fourche.

Ici, avantageusement, le pivot 520 ; 620 ; 720 de chaque support de rail est situé au droit de la plate-forme 510 ; 610 ; 710 de ce support de rail. De cette manière, l'axe de pivot A2 est situé à faible distance de l'axe longitudinal A1, si bien que l'espace de dégagement nécessaire au pivotement du rail de montage 300 et de ses disjoncteurs 401 est réduit.

Chaque support de rail 500 ; 600 ; 700 comprend par ailleurs des premiers moyens de verrouillage 530 ; 630 ; 730 du pivot 520 ; 620 ; 720 agencés pour bloquer le rail de montage 300 en position droite sur le châssis 100. Ces premiers moyens de verrouillage sont alors agencés pour bloquer la mobilité du pivot dans la fourche, en retenant ce pivot au fond de cette fourche. Ainsi, ces premiers moyens de verrouillage permettent de verrouiller l'ensemble des mobilités des rails de montage 300 dans une position telle que le capot du coffret de distribution électrique 1 peut être rapporté sur le châssis 100, en position d'utilisation.

Chaque support de rail 500 ; 600 ; 700 comporte en outre des seconds moyens de verrouillage 530 ; 650 ; 750 du pivot 520 ; 620 ; 720 pour bloquer le rail de montage 300 en position basculée sur le châssis 100. Ces seconds moyens de verrouillage permettent ainsi de verrouiller l'ensemble des mobilités des rails de montage dans une position telle que les entrées de câble des disjoncteurs 401 sont facilement accessibles. Ainsi verrouillés, il n'est plus nécessaire de maintenir à la main le rail de montage 300 en position basculée pour intervenir sur les disjoncteurs 401.

Ici, ces seconds moyens de verrouillage sont agencés pour bloquer les rails de montage 300 en position basculée d'un côté ou de l'autre de leur position droite, c'est-à-dire vers le haut ou vers le bas. De cette manière, les disjoncteurs 401 peuvent être montés avec une orientation quelconque sur les rails de montage 300, de telle sorte que leurs entrées de câble débouchent vers le haut ou vers le bas du châssis 100. Il est par ailleurs ainsi possible de basculer deux rails de montage 300 adjacents dans des sens opposés, de manière à dégager un espace encore plus important entre les deux rangées 400 de disjoncteurs 401, pour faciliter l'accès aux entrées de câble de ces disjoncteurs 401.

Ces seconds moyens de verrouillage 530 ; 650 ; 750 sont préférentiellement agencés de telle sorte que les positions droite et basculée des rails de montage 300 sont séparées angulairement d'un angle compris entre 15 et 30 degrés, préférentiellement égal à 25 degrés.

Tels que représentés sur les figures, les supports de rail 500 ; 600 ; 700 présentent des architectures différentes dans chacun des trois modes de réalisation du coffret de distribution électrique 1.

### Premier mode de réalisation

Dans le premier mode de réalisation représenté sur les figures 3 à 5, la plate-forme 510 de chaque support de rail 500 présente une forme de plaque rectangulaire épaisse, s'étendant en longueur parallèlement à l'axe de pivot A2. Elle comporte une ouverture axiale 512 rectangulaire débouchant sur son bord extérieur, dans laquelle se loge un bombement 340 prévu en saillie sur la face arrière de la paroi principale 301 du rail de montage 300.

Comme le montre la figure 3, ce bombement 340, qui forme un creux sur la face avant de cette paroi principale 301, est percé d'un trou oblong 341 allongé suivant l'axe longitudinal A1 du rail de montage 300. Ce trou oblong 341 permet ainsi de laisser visuellement accès au pivot 520 du support de rail 500, via l'ouverture axiale 512 prévue dans la plate-forme 510 de ce support de rail 500.

Les moyens de fixation rigide prévus sur le support de rail 500 pour fixer le rail de montage 300 comportent ici deux pions cylindriques 513 qui s'étendent en saillie de la face avant de la plate-forme 510 et qui sont adaptés à s'engager dans deux ouvertures 343 de dimensions correspondantes prévues dans la paroi principale 301 du rail de montage 300. Ces pions cylindriques 513 permettent ainsi de bloquer toute mobilité du rail de montage dans le plan de la face avant de la plate-forme 510.

Les moyens de fixation rigide comportent également, le long du bord intérieur de la plate-forme 510, un puits de vissage 511 qui débouche vers l'avant du support de rail et dans lequel peut se visser le corps fileté d'une vis de fixation (non représentée). Pour laisser accès à ce puits de vissage 511, la paroi principale 301 du rail de montage 300 présente une ouverture 342 de diamètre compris entre le diamètre du corps fileté de la vis de fixation et celui de la tête de cette vis de fixation. La vis de fixation, aidée par les pions cylindriques 513, permet ainsi de bloquer toutes les mobilités du rail de montage 300 par rapport au support de rail 500.

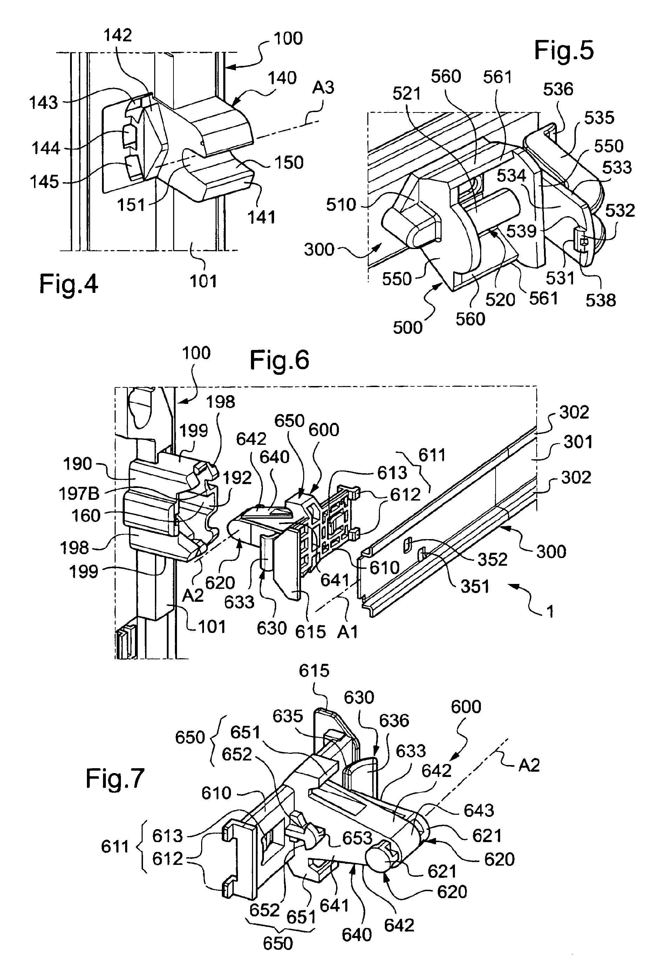

Comme le montre la figure 5, le support de rail 500 comporte deux parois tombantes 550 qui s'étendent à partir des deux bords d'extrémité de la face arrière de la plate-forme 510, perpendiculairement à celle-ci, dans un plan orthogonal à l'axe de pivot A2.

Le pivot 520 du support de rail 500 comporte quant à lui un arbre 521 cylindrique de révolution autour de l'axe de pivot A2, qui s'étend entre ces deux parois tombantes 550. Cet arbre 221 est plus précisément positionné par rapport aux parois tombantes 550 de telle manière que l'écart entre l'axe de pivot A2 et la face avant de la plate-forme 510 est particulièrement faible.

Tel que représenté sur la figure 4, le châssis 100 comporte, pour supporter ce support de rail 500, un montant 140 qui s'élève à partir de la face avant de l'un de ses longerons 101 et qui présente, en renfoncement dans son extrémité libre 141, un berceau en U qui forme le logement 150 d'accueil de l'arbre 521 du support de rail 500. Ce logement 150 est ici profilé de manière à présenter un fond 151 semi-cylindrique, de diamètre égal au diamètre de l'arbre 521 du support de rail 500 et d'axe de support A3 orthogonal à l'axe du longeron 101.

Le support de rail 500, lorsque son arbre 521 est engagé au fond 151 du logement 150 et que son axe de pivot A2 est confondu avec l'axe de support A3, est ainsi libre de pivoter entre une position droite dans laquelle sa plate-forme 510 s'étend sensiblement parallèlement au fond du châssis 100 et une position basculée dans laquelle sa plate-forme 510 est inclinée par rapport au fond du châssis 100.

Les deux parois tombantes 550 du support de rail 500 sont ici éloignées l'une de l'autre d'une distance égale, au jeu près, à la largeur du montant 140 (suivant l'axe de support A3). Ces parois tombantes 550 forment ainsi des butées permettant de bloquer toute translation du support de rail 500 par rapport au châssis 100 suivant l'axe de support A3 lorsque l'arbre 521 du support de rail 500 est engagé dans son logement 150.

Tel que représenté sur la figure 5, le support de rail 500 comporte également deux parois latérales 560 qui s'étendent à l'arrière de la plate-forme 510, entre les bords latéraux des deux parois tombantes 550, parallèlement à l'axe de pivot A2. Les bords arrière 561 de ces deux parois latérales 560 sont ici situés à une distance de la plate-forme 510 telle que lorsque le support de rail 500 est en position basculée, ils viennent en appui contre l'extrémité libre 141 du montant 140 et forment ainsi des butées en rotation du support de rail 500 par rapport au montant 140.

Dans ce premier mode de réalisation du coffret de distribution électrique 1, les premiers et seconds moyens de verrouillage 530 du rail de montage 300 en position droite et inclinée sont confondus.

Ces moyens de verrouillage 530 sont plus précisément agencés pour non seulement bloquer l'inclinaison du support de rail 500 autour de l'axe de pivot A2 en position droite et inclinée, mais en outre pour bloquer l'arbre 521 du support de rail 500 au fond de son logement 150.

Comme le montre plus particulièrement la figure 5, ces moyens de verrouillage 530 comportent une patte d'encliquetage 533 rectangulaire qui s'étend perpendiculairement à l'axe de pivot A2, vers l'arrière du support de rail 500. Cette patte d'encliquetage 533 présente une extrémité avant qui est recourbée pour se raccorder à la face extérieure de la paroi tombante 550 extérieure du support de rail 500, et un bord arrière libre.

Cette patte d'encliquetage 533 porte sur sa face intérieure 534, à proximité de son bord arrière, une dent d'encliquetage 532. Cette dent d'encliquetage 532 présente en particulier une face avant 531 plane et parallèle à la plate-forme 510, une face arrière 538 inclinée par rapport à la plate-forme 510, et deux faces latérales 539 planes et parallèles à l'axe de pivot A2.

Comme le montre la figure 4, le châssis 100 comporte en correspondance un épaulement triangulaire 142 qui s'élève à partir du longeron 101, le long de la face intérieure du montant 140, et qui présente à sa base trois cavités d'accueil de la dent d'encliquetage 532, dont une cavité centrale 144 et deux cavités latérales 143, 145.

Ces trois cavités 143, 144, 145 débouchent vers l'intérieur du châssis 100 par trois fenêtres de formes rectangulaires et de dimensions égales à celles de la dent d'encliquetage 532.

Ces trois cavités 143, 144, 145 sont positionnées de manière à s'étendre à une même distance de l'axe de support A3, qui est égale à la distance séparant l'axe de pivot A2 de la face avant 531 de la dent d'encliquetage 532. De cette manière, la dent d'encliquetage 532 ne peut s'engager dans l'une ou l'autre de ces cavités qu'à condition que l'arbre 521 du support de rail 500 soit engagé au fond 151 du logement 150 du montant 140.

Ainsi, lorsque la dent d'encliquetage 532 du support de rail 500 est engagée dans la cavité centrale 144 du châssis 100, sa face avant 531 et ses faces latérales 139 retiennent le support de rail 500 en position droite sur le châssis 100. En revanche, lorsque la dent d'encliquetage 532 est engagée dans l'une ou l'autre des cavités latérales 143, 145 du châssis 100, sa face avant 531, l'une de ses faces latérales 139 et le bord arrière 561 de l'une des parois latérales 560 retiennent le support de rail 500 en position basculée sur le châssis 100.

Pour incliner le rail de montage 300, le support de rail 500 comporte un levier de déverrouillage 535 en forme de S, dont une extrémité arrière est courbée pour se raccorder à la face extérieure de la patte d'encliquetage 533, à proximité de son bord arrière, et dont une extrémité avant est courbée pour former une partie d'appui 536 accessible au doigt de l'installateur, s'étendant sensiblement parallèlement à la plate-forme 510.

La manoeuvre de ce levier de déverrouillage 535 est donc particulièrement aisée puisqu'elle consiste simplement à pincer, avec l'index et le pouce d'une même main, la partie d'appui 536 du levier de déverrouillage 535 contre la plate-forme 510 afin de faire fléchir la patte d'encliquetage 533.

Dans ce premier mode de réalisation du coffret de distribution électrique 1, l'assemblage du rail de montage 300 (équipé de ses disjoncteurs) sur le châssis 100 est réalisé de la manière suivante.

Au cours d'une première opération, l'installateur équipe le rail de montage 300 de deux supports de rail 500.

Il engage pour cela les ouvertures 343 du rail de montage 300 sur les pions cylindriques 513 des plates-formes 510 des deux supports de rail 500, de telle sorte que la face arrière de la paroi principale 301 du rail de montage 300 s'applique contre les faces avant des plates-formes 510 des supports de rail 500. Il visse ensuite deux vis de fixation dans les puits de vissage 511 des deux supports de rail 500, au travers des ouvertures 342 du rail de montage 300, pour fixer rigidement les deux supports de rail 500 à ce rail de montage 300.

Au cours d'une seconde opération, l'installateur rapporte cet ensemble sur les montants 140 des longerons 101 du châssis 100.

Il enfourche pour cela les arbres 521 des deux supports de rail 500 dans les logements 150 prévus aux extrémités libres des montants 140 correspondants du châssis 100.

Il applique alors un effort sur le rail de montage 300 en direction du châssis 100, de manière que les faces arrière 538 inclinées des dents d'encliquetage 532 des supports de rail 500 glissent contre les épaulements triangulaires 142 du châssis 100, ce qui fait fléchir les pattes d'encliquetage 533. De cette manière, les dents d'encliquetage 532 s'encliquettent naturellement et facilement dans les cavités centrales 144 du châssis 100. Dans cette position, le rail de montage 300 est rigidement fixé en position droite sur le châssis 100.

Le branchement des câbles électriques du réseau électrique local aux disjoncteurs 401 portés par ce rail de montage 300 est quant à lui réalisé de la manière suivante.

L'installateur pince, avec l'index et le pouce de chacune de ses mains, les parties d'appui 536 des deux leviers de déverrouillage 535 contre les plates-formes 510 des deux supports de rail 500, afin de faire fléchir les pattes d'encliquetage 533 et d'extraire les dents d'encliquetage 532 hors des cavités centrales 144 du châssis 100. Ainsi, le rail de montage 300 est libre de basculer autour de l'axe de pivot A2. Il peut même être extrait du châssis 100.

L'installateur fait alors basculer le rail de montage 300 soit vers le haut, soit vers le bas, selon que les entrées de câble des disjoncteurs 401 sont respectivement tournées vers le bas ou vers le haut du châssis 100.

Une fois le rail de montage 300 correctement incliné par rapport au châssis 100, l'installateur relâche les deux leviers de déverrouillage 535 de manière que les dents d'encliquetage 532 s'encliquettent dans les cavités latérales 143, 145 du châssis 100. Dans cette position, le rail de montage 300 est rigidement fixé en position basculée sur le châssis 100, ce qui facilite les opérations de câblage des disjoncteurs 401.

Une fois les disjoncteurs 401 branchés, l'installateur rétablit le rail de montage 300 en position droite, en manoeuvrant à nouveau les leviers de déverrouillage 535.

### Second mode de réalisation

Dans le second mode de réalisation du coffret de distribution électrique 1 représenté sur les figures 6 à 14, la plate-forme 610 de chaque support de rail 600 présente une forme rectangulaire s'étendant en longueur parallèlement à l'axe de pivot A2.

Elle comporte des moyens de fixation 611 au rail de montage 300 qui permettent de bloquer rigidement toutes les mobilités du rail de montage 300 sans nécessiter aucun outillage.

Comme le montrent les figures 6, 10 et 11, ces moyens de fixation 611 comportent à cet effet, d'une part, des moyens de crochetage 612 du rail de montage 300, et, d'autre part, des moyens de blocage automatique 613 du rail de montage 300 en position crochetée sur la plate-forme 610.

Les moyens de crochetage comportent plus précisément deux crocs 612 identiques, qui s'étendent à partir du bord intérieur de la face avant de la plate-forme 610. Ces deux crocs 612 comportent une partie droite qui s'élève perpendiculairement à la face avant de la plate-forme 610, et une partie repliée à angle droit vers l'intérieur du châssis 100.

Le rail de montage 300 comporte en correspondance deux ouvertures de crochetage 351 de formes carrées, présentant des largeurs égales, au jeu près, aux largeurs des parties repliées des crocs 612. Ainsi, lorsque l'installateur rapporte le rail de montage 300 sur la plate-forme 610 du support de rail 600, les crocs 612 passent au travers des deux ouvertures de crochetage 351, permettant ainsi au rail de montage 300 de correctement s'appliquer sur la face avant de la plate-forme 610.

Les moyens de blocage automatique du rail de montage 300 comportent quant à eux une languette élastiquement déformable 613 apte à retenir le rail de montage 300 en position crochetée sur les crocs 612, suivant une orientation telle que l'axe longitudinal A1 de ce rail de montage 300 s'étend parallèlement à l'axe de pivot A2 du support de rail 600.

Cette languette élastiquement déformable 613, logée dans un renfoncement prévu dans la face avant de la plate-forme 610, présente une forme rectangulaire. Elle comporte un bord d'extrémité rattaché à la plate-forme 610 pour former une charnière de pivotement et un bord d'extrémité libre 614 opposé tourné vers l'extérieur du châssis 100.

Au repos, cette languette élastiquement déformable 613 est inclinée par rapport au plan de la plate-forme 610, de manière que son bord d'extrémité libre 614 s'étend en saillie de la face avant de la plate-forme 610.

Grâce à son élasticité, la languette élastiquement déformable 613 est adaptée à se déformer lorsque l'installateur rapporte le rail de montage 300 sur la plate-forme 610 du support de rail. Elle est plus précisément apte à se loger entièrement dans son renfoncement pour ne pas former obstacle à la mise en place de la face arrière de la paroi principale 301 du rail de montage 300 contre la face avant de la plate-forme 610.

Le rail de montage 300 comporte, en correspondance de cette languette élastiquement déformable 613, une ouverture de blocage 352 de forme rectangulaire, présentant une largeur égale, au jeu près, à la largeur de la languette élastiquement déformable 613.

Cette ouverture de blocage 352 est située par rapport aux ouvertures de crochetage 351 de telle manière que, lorsque les crocs 612 sont en position crochetée sur le rail de montage 300, la languette élastiquement déformable 613 peut revenir en position de repos en s'engageant dans l'ouverture de blocage 352 de telle sorte que son bord d'extrémité libre 614 s'appuie sur le bord correspondant de l'ouverture de blocage 352. De cette manière, la languette élastiquement déformable 612 retient le rail de montage 300 en position fixe sur le support de rail 600.

Tels que représentés sur les figures 6, 9 et 10, les moyens de fixation du rail de montage 300 comportent ici en outre une paroi d'extrémité 615 qui s'élève à partir du bord extérieur de la face avant de la plate-forme 610 et qui forme un appui pour l'extrémité correspondante du rail de montage 300. Cette paroi d'extrémité 615 est ici équipée d'une nervure 616 qui s'étend le long de sa face intérieure, parallèlement à la face avant de la plate-forme 610 et à une distance de celle-ci égale, au jeu près, à l'épaisseur de la paroi principale 301 du rail de montage 300. Cette nervure 616 permet ainsi de retenir l'extrémité du rail de montage 300 au contact de la face avant de la plate-forme 610.

Le support de rail 600 comporte par ailleurs un pied 640 creux qui s'étend à partir de la face arrière de la plate-forme 610, perpendiculairement à celle-ci, pour former un T avec cette plate-forme 610.

Comme le montrent les figures 6 et 7, le pied 640 de ce support de rail 600 comporte deux parois principales 641 planes et orthogonales à l'axe de pivot A2, deux parois latérales 642 sensiblement planes qui s'étendent entre les bords des deux parois principales 641, parallèlement à l'axe de pivot A2, et une paroi arrière 643 qui ferme le pied 640 et qui est arrondie pour présenter une forme semi-cylindrique autour de l'axe de pivot A2. Telles que représentées sur la figure 7, les deux parois latérales 642 sont inclinées l'une par rapport à l'autre pour former un dièdre ouvert vers l'avant du support de rail 600.

Le pivot 620 du support de rail 600 est ici porté par ce pied 640. Il comporte deux arbres 621 cylindriques de révolution autour de l'axe de pivot A2, situés de part et d'autre du pied 640. Ces deux arbres 621 présentent chacun une longueur réduite et un diamètre inférieur au diamètre de la paroi arrière 643 du pied 640.

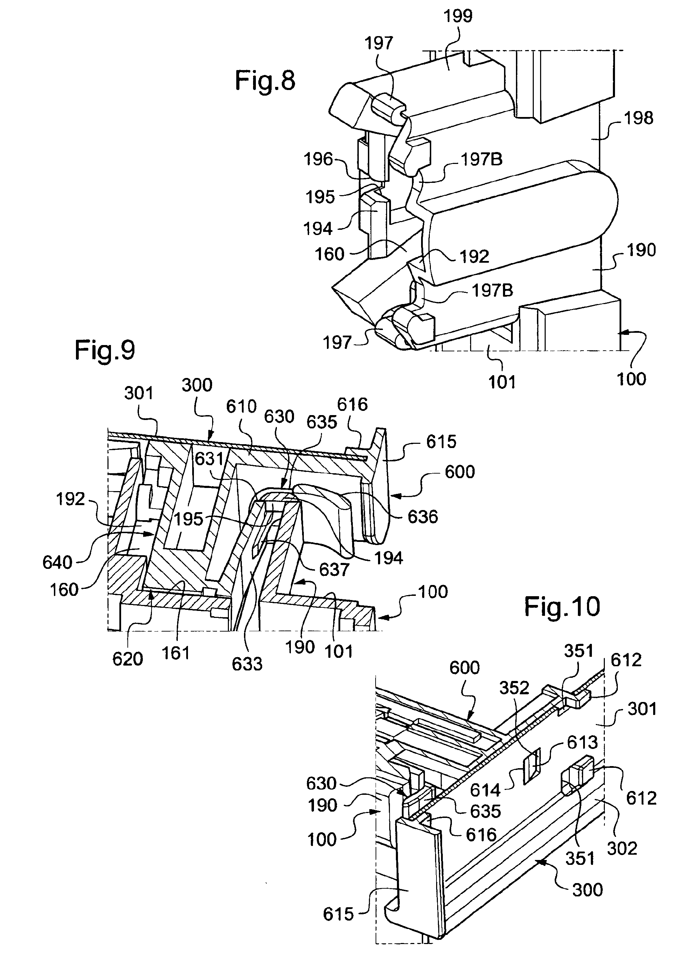

Tel que représenté sur les figures 6 et 8, le châssis 100 comporte, pour supporter ce support de rail 600, un montant 190 creux qui s'élève à partir de la face avant de l'un de ses longerons 101 et qui est ouvert en face avant pour définir intérieurement un logement 160 d'accueil du pied 640 du support de rail 600.

Ce montant 190 présente une section sensiblement carrée. Il comporte ainsi deux parois latérales intérieure et extérieure 198, respectivement tournées vers l'intérieur et vers l'extérieur du châssis 100, et deux parois latérales haute et basse 199 respectivement tournées vers le haut et vers le bas du châssis 100 lorsque ce dernier est fixé à la paroi murale.

Comme le montre la figure 12, ce montant 190 comporte en outre deux cloisons internes 191 qui sont inclinées l'une par rapport à l'autre d'un angle égal à l'angle du dièdre formé par les deux parois latérales 642 du pied 640 du support de rail 600. Ces deux cloisons internes 191 sont reliées l'une à l'autre par une paroi de fond 193 semi-cylindrique de diamètre égal au diamètre de la paroi arrière 643 du pied 640 du support de rail 600 et d'axe de support A3 orthogonal à l'axe du longeron 101.

La paroi de fond 193 forme ainsi avec les deux cloisons internes 191 du montant 190 un berceau en U d'accueil du pied 640 du support de rail 600.

Les parois intérieure et extérieure 198 du montant 190 sont par ailleurs écartées l'une de l'autre d'une distance qui est égale à la distance séparant les extrémités libres des deux arbres 621 du support de rail 600. Ces deux parois forment ainsi des butées agencées pour bloquer toute translation du support de rail 600 par rapport au châssis 100 suivant l'axe de pivot A2.

Ainsi, grâce à la correspondance de forme entre le pied 640 du support de rail 600 et le logement 160 défini à l'intérieur du montant 190, lorsque le support de rail 600 est engagé au fond 161 de son logement 160, ses trois mobilités de rotation et deux de ses mobilités de translation sont bloquées. La seule et unique mobilité qui lui reste est alors une mobilité de translation qui permet d'extraire ce support de rail 600 hors de son logement 160.

Pour libérer la rotation du support de rail 600 autour de l'axe de pivot A2, il est donc nécessaire d'extraire en partie le support de rail 600 hors de son logement 160.

Afin de guider cette extraction puis ce pivotement du support de rail 600, le montant 190 comporte, en renfoncement de la face interne de sa paroi intérieure, une rainure 192 (voir figure 8) formant glissière dans laquelle peut s'engager l'un des arbres 621 du support de rail 600. Cette rainure 192 présente une largeur égale au diamètre des arbres 621. Elle s'étend depuis le fond 161 du logement 160 vers l'avant, et débouche sur le bord d'extrémité avant du montant 190.

Il est ainsi possible, en faisant naviguer l'arbre 621 du support de rail 600 dans cette rainure 192, de faire pivoter le support de rail 600 entre une position droite dans laquelle sa plate-forme 610 s'étend sensiblement parallèlement au fond du châssis 100 et une position basculée dans laquelle sa plate-forme 610 est inclinée par rapport au fond du châssis 100.

Dans ce second mode de réalisation du coffret de distribution électrique 1, les premiers moyens de verrouillage 630 du rail de montage 300 en position droite sont agencés pour bloquer le pied 640 du support de rail 600 au fond 161 de son logement 160 (voir figures 9 et 12).

Comme le montrent plus particulièrement les figures 7 et 9, ces premiers moyens de verrouillage 630 comportent une patte d'encliquetage 633 rectangulaire qui s'étend sensiblement radialement par rapport à l'axe de pivot A2, depuis l'extrémité libre de l'un des arbres 621, vers l'avant du support de rail 600. Cette patte d'encliquetage 633 présente ainsi un bord d'extrémité libre 631 qui est tourné vers l'avant du support de rail 600.

Le bord avant de la paroi latérale extérieure 198 du montant 190 du châssis 100 porte en correspondance un rebord 194 (figures 8 et 9) qui fait saillie à l'intérieur du logement 160 et qui présente une face d'appui 195 orientée vers l'arrière du châssis 100. La face d'appui 195 de ce rebord 194 est ici positionnée à une distance de l'axe de support A3 qui est égale à la distance séparant l'axe de pivot A2 du bord d'extrémité libre 631 de la patte d'encliquetage 633 du support de rail 600.

De cette manière, lorsque le pied 640 du support de rail 600 est engagé au fond 161 de son logement 160, le bord d'extrémité libre 631 de la patte d'encliquetage 633 s'encliquette sous la face d'appui 195 du rebord 194 du montant 190 du châssis 100, bloquant alors le pied 640 du support de rail 600 au fond 161 de son logement 160 (figure 9). Le support de rail 600 est ainsi rigidement fixé en position droite sur le châssis 100.

Pour libérer le support de rail 600, la patte d'encliquetage 633 est équipée d'un levier de déverrouillage 635. Comme le montre la figure 9, ce levier de déverrouillage 635 s'étend depuis le bord avant de la patte d'encliquetage 633 vers l'extérieur du support de rail 600. Il définit ainsi une partie d'appui 636 accessible au doigt de l'installateur, qui est courbée pour optimiser son ergonomie.

Tel que représenté sur la figure 9, ce levier de déverrouillage 635 comporte en outre une nervure médiane 637 de rigidification. Comme le montre la figure 8, la paroi latérale extérieure 198 du montant 190 présente en correspondance sur son bord avant une fente centrale 196 afin de ne pas former obstacle au mouvement du levier de déverrouillage 635 et de sa nervure médiane 637.

Dans ce second mode de réalisation du coffret de distribution électrique 1, les seconds moyens de verrouillage 650, qui permettent ici d'immobiliser le support de rail 600 en position basculée sur le châssis 100, sont totalement distincts des premiers moyens de verrouillage 630.

Comme le montre la figure 7, ils comportent en l'espèce, d'une part, deux crochets extérieurs 651 qui font saillie de part et d'autre des parois latérales 642 du pied 640 du support de rail 600, et, d'autre part, deux crochets intérieurs 652 situés sur la paroi principale intérieure 641 du support de rail 600.

Les crochets extérieurs 651 sont plus précisément conçus pour immobiliser le support de rail 600 en position basculée vers le haut sur le châssis 100 tandis que les deux crochets intérieurs 652 sont plus précisément conçus pour immobiliser le support de rail 600 en position basculée vers le bas sur le châssis 100 (voir figure 14).

Comme le montre la figure 7, les deux crochets extérieurs 651 s'étendent à l'avant du pied 640 et sont courbés vers l'extérieur et vers l'arrière du support de rail 600 de manière à pouvoir s'accrocher au bord avant de la paroi latérale haute 199 du montant 190 lorsque le support de rail 600 est en position basculée vers le haut sur le châssis 100.

Telles que représentées sur les figures 8 et 12, les parois latérales haute et basse du montant 190 sont à cet effet chacune équipées d'une patte recourbée 197 (figure 8) qui fait saillie à l'avant du montant 190 et qui est recourbée vers l'arrière du châssis 100.

Ces pattes recourbées 197 sont ici positionnées de telle sorte que lorsque le support de rail 600 est amené en position basculée vers le haut, l'un de ses crochets extérieurs 651 s'accroche à la patte recourbée 197 de la paroi latérale haute 199 du montant 190, permettant ainsi d'immobiliser le support de rail 600 en position basculée sur le châssis 100.

Comme le montre la figure 7, les deux crochets intérieurs 652 sont quant à eux portés par un ergot 653 s'étendant parallèlement et à distance de la paroi principale intérieure 614 du support de rail 600. Cet ergot 653 est ici situé à l'arrière de l'arbre 621 correspondant du support de rail, si bien qu'il est adapté à coulisser dans la rainure 192 du montant 190. Lorsque le pied 640 du support de rail est engagé au fond 161 de son logement 160, cet ergot 653 participe alors à bloquer la rotation du support de rail 600 autour de l'axe de pivot A2 en coopérant avec les bords de cette rainure 192.

Cet ergot 653 présente ici une forme de champignon renversé, dont la tête est tournée vers l'arrière du support de rail 600 et dont le pied est tourné vers l'avant. Cet ergot délimite ainsi, de part et d'autre de son pied, les deux crochets intérieurs 652 qui sont ainsi courbés vers l'extérieur et vers l'avant du support de rail 600.

Comme le montrent les figures 8 et 14, le bord d'extrémité de la paroi latérale extérieure 198 du montant 190 définit deux rampes 197B qui s'étendent chacune à partir d'un côté ou de l'autre de l'embouchure de la rainure 192 et dont les extrémités sont recourbées l'une vers l'autre.

Ces extrémités recourbées sont ici positionnées de telle sorte que lorsque le support de rail 600 est amené en position basculée vers le bas (figure 14), l'un de ses crochets intérieurs 652 s'accroche à l'une des extrémités recourbées des rampes 197B du montant 190, permettant ainsi d'immobiliser le support de rail 600 en position basculée sur le châssis 100.

Dans ce second mode de réalisation du coffret de distribution électrique 1, l'assemblage du rail de montage 300 (équipé de ses disjoncteurs) sur le châssis 100 est réalisé de la manière suivante.

Au cours d'une première opération, l'installateur équipe le rail de montage 300 de deux supports de rail 600.

Il rapporte à cet effet la face avant de la plate-forme 610 de chaque support de rail 600 contre la face arrière de la paroi principale 301 du rail de montage 300, de telle manière que les crocs 612 des deux supports de rail 600 passent au travers des ouvertures de crochetage 351 du rail de montage 300. Il exerce ensuite un effort sur chaque support de rail 600 pour le translater le long de l'axe de montage A1, de telle sorte que la languette élastiquement déformable 613 de ce support de rail 600 se clipse dans l'ouverture de blocage 352 correspondante du rail de montage 300.

Dans cette position, les supports de rail 600 sont rigidement bloqués sur le rail de montage 300.

Au cours d'une seconde opération, l'installateur rapporte cet ensemble sur les montants 190 des longerons 101 du châssis 100.

Il engage pour cela les pieds 640 des deux supports de rail 600 dans les logements 160 définis à l'intérieur des montants 190.

Il applique alors un effort sur le rail de montage 300 en direction du châssis 100, de manière que les pattes d'encliquetage 633 des supports de rail 600 s'encliquettent naturellement sous les rebords 194 des montants 190. Dans cette position, le rail de montage 300 est rigidement fixé en position droite sur le châssis 100.

Le branchement des câbles électriques du réseau électrique local aux disjoncteurs 401 portés par ce rail de montage 300 est quant à lui réalisé de la manière suivante.

L'installateur pince, avec l'index et le pouce de chacune de ses mains, les parties d'appui 636 des deux leviers de déverrouillage 635 contre les plates-formes 610 des deux supports de rail 600 afin de faire fléchir les pattes d'encliquetage 633. Ainsi, le rail de montage 300 est libre d'être extrait hors du châssis 100.

L'installateur tire alors le rail de montage 300 vers l'avant puis relâche les deux leviers de déverrouillage 635. Il fait ensuite basculer ce rail de montage 300 soit vers le haut, soit vers le bas, selon que les entrées de câble des disjoncteurs 401 sont respectivement tournées vers le bas ou vers le haut du châssis 100.

Une fois le rail de montage 300 incliné par rapport au châssis 100, l'installateur repousse le rail de montage 300 vers l'arrière, de manière que l'un des crochets intérieurs 652 ou extérieurs 651 de chaque support de rail 600 vienne s'accrocher à la paroi latérale correspondante du montant 190 du châssis 100.

Dans cette position, le rail de montage 300 est immobilisé en position basculée sur le châssis 100, ce qui facilite les opérations de câblage des disjoncteurs 401.

Une fois les disjoncteurs 401 branchés, l'installateur rétablit le rail de montage 300 en position droite, en le redressant puis en appliquant dessus un effort en direction du châssis 100, de manière que les pattes d'encliquetage 633 des supports de rail 600 s'encliquettent à nouveau sous les rebords 194 des montants 190.

### Troisième mode de réalisation

Dans le troisième mode de réalisation du coffret de distribution électrique 1 représenté sur les figures 15 à 18, la plate-forme 710 de chaque support de rail 700 présente une forme de plaque rectangulaire épaisse, s'étendant en longueur parallèlement à l'axe de pivot A2.

Elle comporte des moyens de fixation 711 du rail de montage 300 identiques à ceux du support de rail 600 représenté sur la figure 6, avec en particulier deux crocs 712 (figure 17) adaptés à s'accrocher au rail de montage 300 et une languette élastiquement déformable (non visible) adaptée à bloquer rigidement le rail de montage sur la plate-forme 710, de telle manière que son axe longitudinal A1 s'étende parallèlement à l'axe de pivot A2.

Le support de rail 700 comporte par ailleurs un pied 740, d'architecture proche de celle du pied 640 du support de rail 600 représenté sur la figure 19, comportant deux parois principales 741, deux parois latérales 742 en dièdre et une paroi arrière 743.

Le pivot 720 du support de rail 700 comporte ici également deux arbres 721 cylindriques de révolution autour de l'axe de pivot A2, de diamètre égal au diamètre de la paroi arrière 743 du pied 740, si bien qu'ils s'étendent dans le prolongement de cette paroi arrière 743.

Tel que représenté sur les figures 15 à 17, le châssis 100 comporte, pour supporter ce support de rail 700, un montant 180 de forme proche de celle du montant 190 représenté sur la figure 8, avec deux parois latérales intérieure et extérieure 188 et deux parois latérales haute et basse 189, et deux cloisons internes 181 en dièdre reliées par une paroi de fond 183 pour définir intérieurement un logement 170 d'accueil du pied 740 du support de rail 700.

Dans ce mode de réalisation du coffret de distribution électrique, pour libérer la rotation du support de rail 700 autour de l'axe de pivot A2, il est ici également nécessaire d'extraire en partie le support de rail 700 hors de son logement 170.

Le montant 180 comporte à cet effet, en renfoncement de la face interne de sa paroi intérieure, une rainure 182 (voir figure 17) formant glissière dans laquelle peut coulisser l'un des arbres 721 du support de rail 700.

Dans ce troisième mode de réalisation du coffret de distribution électrique 1, les premiers moyens de verrouillage 730 du rail de montage 300 en position droite sont ici aussi agencés pour bloquer le pied 740 du support de rail 700 au fond 171 de son logement 170.

Comme le montre plus particulièrement la figure 28, ces premiers moyens de verrouillage 730 comportent une patte d'encliquetage 733 présentant un bord d'extrémité libre 731 tourné vers l'avant du support de rail 700.

Le montant 180 du châssis 100 comporte en correspondance une nervure 184 (figure 15) qui fait saillie à l'intérieur du logement 170 et qui présente un bord d'appui orienté vers l'arrière du châssis 100.

De cette manière, lorsque le pied 740 du support de rail 700 est engagé au fond 171 de son logement 170, le bord d'extrémité libre 731 de la patte d'encliquetage 733 s'encliquette sous le bord d'appui de la nervure 184 du montant 180 du châssis 100, bloquant alors le pied 740 du support de rail 700 au fond 171 de son logement 170. Le support de rail 700 est ainsi rigidement fixé en position droite sur le châssis 100.

Pour libérer le support de rail 700, la patte d'encliquetage 733 est ici également équipée d'un levier de déverrouillage 735 courbé en arc-de-cercle pour définir une partie d'appui 736 accessible au doigt de l'installateur, située au-dessus du bord d'extrémité libre 731 de la patte d'encliquetage 733.

Tel que représenté sur la figure 15, ce levier de déverrouillage 735 comporte, le long de sa longueur, une nervure médiane 737 permettant de rigidifier la partie d'appui 736.

Comme le montre cette figure 15, la paroi extérieure 188 du montant 180 présente sur son bord avant une large échancrure 185 permettant au levier de déverrouillage 735 de faire saille hors du logement 170 lorsque le pied 740 du support de rail 700 est engagé au fond 171 de ce logement 170. Cette échancrure 185 présente en particulier une fente centrale 186 pour loger la nervure médiane 737 de ce levier de déverrouillage 735. Grâce à cette échancrure 185, le levier de déverrouillage 735 reste ainsi facilement accessible à l'installateur.

Dans ce troisième mode de réalisation du coffret de distribution électrique 1, les seconds moyens de verrouillage 750, qui permettent de bloquer le support de rail 700 en position basculée sur le châssis 100, ne sont pas totalement distincts des premiers moyens de verrouillage 730.

Ils comportent en l'espèce, outre la patte d'encliquetage 733 précédemment décrite, deux crochets 751 qui s'étendent de part et d'autre du pied 740 du support de rail 700, à partir des parois latérales 742 de ce pied 740.

Comme le montre la figure 17, ces deux crochets 751 s'étendent à l'avant du pied 740 et sont courbés vers l'arrière du support de rail 700 de manière à pouvoir s'accrocher au bord d'extrémité avant de l'une ou l'autre des parois latérales du montant 180 lorsque le support de rail 700 est en position basculée sur le châssis 100.

Ces deux crochets 751 permettent seulement d'immobiliser le support de rail 700 en position basculée sur le châssis 100 lorsqu'aucun effort extérieur n'est appliqué sur ce support de rail.

Pour fixer rigidement le support de rail 700 en position basculée, les parois latérales haute et basse du montant 180 sont ici chacune équipées d'une nervure secondaire 187 (figure 18) qui fait saillie à l'intérieur du logement 170 et qui présente un bord d'appui orienté vers l'arrière du châssis 100.

Ces nervures secondaires 187 sont ici positionnées de telle sorte dans le logement 170 que lorsque le support de rail 700 est en position basculée et que l'un de ses crochets 751 s'accroche à l'une des parois latérales du montant 180, le bord d'extrémité libre 731 de la patte d'encliquetage 733 s'encliquette sous le bord d'appui de la nervure secondaire 187 du montant 180 du châssis 100.

La coopération de la patte d'encliquetage 733 avec la nervure secondaire 187 permet ainsi de fixer rigidement le support de rail 700 en position basculée sur le châssis 100.

Dans ce troisième mode de réalisation du coffret de distribution électrique 1, l'assemblage du rail de montage 300 (équipé de ses disjoncteurs) sur le châssis 100 est réalisé de la manière suivante.

Au cours d'une première opération d'assemblage, un opérateur équipe le rail de montage 300 de deux supports de rail 700, de la même manière qu'exposée dans le second mode de réalisation du coffret de distribution électrique 1.

Au cours d'une seconde opération, l'opérateur rapporte cet ensemble sur les montants 180 des longerons 101 du châssis 100.

Il engage pour cela les pieds 740 des deux supports de rail 700 dans les logements 170 définis à l'intérieur des montants 180.

Il applique alors un effort sur le rail de montage 300 en direction du châssis 100, de manière que les pattes d'encliquetage 733 des supports de rail 700 s'encliquettent naturellement et facilement sous les rainures 184 des montants 180. Dans cette position, le rail de montage 300 est rigidement fixé en position droite sur le châssis 100.

Le branchement des câbles électriques du réseau électrique local aux disjoncteurs 401 portés par ce rail de montage 300 est quant à lui réalisé de la manière suivante.

L'opérateur pince, avec l'index et le pouce de chacune de ses mains, les parties d'appui 736 des deux leviers de déverrouillage 735 contre les plates-formes 710 des deux supports de rail 700 afin de faire fléchir les pattes d'encliquetage 733. Ainsi, le rail de montage 300 est libre d'être extrait hors du châssis 100.

L'opérateur tire alors le rail de montage 300 vers l'avant puis fait basculer ce rail de montage 300 soit vers le haut, soit vers le bas, selon que les entrées de câble des disjoncteurs 401 sont respectivement tournées vers le bas ou vers le haut du châssis 100.

Une fois le rail de montage 300 incliné par rapport au châssis 100, l'opérateur repousse le rail de montage 300 vers l'arrière de manière que les crochets 751 des supports de rail 700 viennent s'accrocher aux parois latérales des montants 180 du châssis 100.

L'opérateur relâche alors les deux leviers de déverrouillage 735 de manière que les bords d'extrémité libre 731 des pattes d'encliquetage 733 s'encliquettent sous les nervures secondaires 187 des montants 180. Dans cette position, le rail de montage 300 est rigidement fixé en position basculée sur le châssis 100, ce qui facilite les opérations de câblage des disjoncteurs 401.

Une fois les disjoncteurs 401 branchés, l'opérateur rétablit le rail de montage 300 en position droite, en manoeuvrant à nouveau les leviers de déverrouillage 735.

## Revendications

1. Coffret ou tableau de distribution électrique (1) comportant un châssis (100) avec un fond (102) à appliquer contre une paroi murale, au moins un rail de montage (300) d'appareillages électriques modulaires (401), et au moins deux supports de rail (500 ; 600 ; 700) comprenant chacun :
- une plate-forme (510 ; 610 ; 710) d'accueil d'une extrémité dudit rail de montage (300), qui comporte des moyens de fixation (511 ; 611 ; 711) du rail de montage (300) suivant un axe longitudinal (A1),
- un pivot (520 ; 620 ; 720) qui est situé au droit de ladite plate-forme (510 ; 610 ; 710), c'est-à-dire à l'arrière du rail de montage (300), dans l'espace délimité par les deux demi-plans qui s'étendent respectivement à partir des deux bords longitudinaux du rail de montage (300), perpendiculairement à celui-ci, et qui coopère avec le châssis (100) pour former une liaison pivot simple d'axe de pivot (A2) parallèle à l'axe longitudinal (A1), permettant à ladite plate-forme (510 ; 610 ; 710) de pivoter par rapport audit châssis (100) entre une position droite dans laquelle elle s'étend sensiblement parallèlement au fond (102) du châssis (100) et une position basculée, et
- des premiers moyens de verrouillage (530 ; 630 ; 730) dudit pivot (520 ; 620 ; 720) pour fixer ladite plate-forme (510 ; 610 ; 710) en position droite sur le châssis (100),
**caractérisé en ce que** le châssis (100) comporte un logement (150 ; 160 ; 170) d'accueil dudit pivot (520 ; 620 ; 720) en forme de fourche, et les premiers moyens de verrouillage (530 ; 630 ; 730) sont agencés pour bloquer ledit pivot (520 ; 620 ; 720) au fond de cette fourche.

2. Coffret ou tableau de distribution électrique (1) selon la revendication précédente, dans lequel ledit logement (150 ; 160 ; 170) est ouvert vers l'avant, à l'opposé du fond (102) du châssis (100).

3. Coffret ou tableau de distribution électrique (1) selon l'une des revendications précédentes, dans lequel ledit pivot (520 ; 620 ; 720) et ledit logement (150 ; 160 ; 170) présentent chacun une surface au moins en partie cylindrique de révolution de diamètre égal, au jeu près.

4. Coffret ou tableau de distribution électrique (1) selon l'une des revendications précédentes, dans lequel chaque support de rail (500 ; 600 ; 700) comporte des seconds moyens de verrouillage (530 ; 650 ; 750) dudit pivot (520 ; 620 ; 720) pour fixer ladite plate-forme (510 ; 610 ; 710) en position basculée sur le châssis (100).

5. Coffret ou tableau de distribution électrique (1) selon l'une des revendications précédentes, dans lequel lesdits premiers moyens de verrouillage (530 ; 630 ; 730) comportent une patte d'encliquetage dont une face d'appui (531, 631, 731) est adaptée à s'accrocher au châssis (100).

6. Coffret ou tableau de distribution électrique (1) selon les revendications 4 et 5, dans lequel ladite patte d'encliquetage comporte un ergot (532) qui porte ladite face d'appui (531) et qui est adapté à être engagé dans l'une d'au moins deux fenêtres (143, 144, 145) prévues en correspondance sur le châssis (100), pour fixer ladite plate-forme (510) en position droite ou en position basculée sur le châssis (100).

7. Coffret ou tableau de distribution électrique (1) selon les revendications 4 et 5, dans lequel chaque support de rail (600 ; 700) comporte, sur au moins un côté, un crochet extérieur (651 ; 751) pour immobiliser ladite plate-forme (610 ; 710) en position basculée sur le châssis (100).

8. Coffret ou tableau de distribution électrique (1) selon la revendication précédente, dans lequel chaque support de rail (600) comporte un crochet intérieur (652) tourné à l'opposé du crochet extérieur (651).

9. Coffret ou tableau de distribution électrique (1) selon l'une des revendications précédentes, dans lequel ladite face d'appui (731) est adaptée à s'accrocher au châssis (100) lorsque ladite plate-forme (710) est en position basculée sur le châssis (100).

10. Coffret ou tableau de distribution électrique (1) selon l'une des revendications 6 et 9, dans lequel lesdits premiers et seconds moyens de verrouillage (230) sont confondus.

11. Coffret ou tableau de distribution électrique (1) selon la revendication 8, dans lequel lesdits premiers et seconds moyens de verrouillage (230) sont distincts.

12. Coffret ou tableau de distribution électrique (1) selon l'une des revendications 4 à 11, dans lequel lesdites positions droite et basculée de ladite plate-forme (510 ; 610 ; 710) sont séparées angulairement d'un angle compris entre 15 et 30 degrés, préférentiellement égal à 25 degrés.

## Patentansprüche

1. Elektrischer Verteilerkasten bzw. elektrische Verteilertafel (1), der/die umfasst:
- einen Rahmen (100) mit einem Boden (102), der an einer Wand anzubringen ist, mindestens eine Montageschiene (300) für bausteinartige elektrische Geräte (401) und mindestens zwei Schienenhalterungen (500; 600; 700), die jeweils umfassen:
- eine Aufnahmeplattform (510; 610; 710) für ein Ende der Montageschiene (300), die Befestigungsmittel (511; 611; 711) zur Befestigung der Montageschiene (300) entlang einer Längsachse (A1) aufweist,
- einen Drehzapfen (520; 620; 720), der sich vor der Plattform (510; 610; 710) befindet, das heißt hinter der Montageschiene (300) in dem Raum, der von den beiden Halbebenen abgegrenzt wird, die sich jeweils ausgehend von den zwei Längsrändern der Montageschiene (300) senkrecht dazu erstrecken, und der mit dem Rahmen (100) zusammenwirkt, um eine einfache Drehachsenverbindung (A2) parallel zur Längsachse (A1) zu bilden, die der Plattform (510; 610; 710) ermöglicht, sich in Bezug zum Rahmen (100) zwischen einer geraden Position, in der sie sich im Wesentlichen parallel zum Boden (102) des Rahmens (100) erstreckt, und einer gekippten Position zu drehen, und
- erste Verriegelungsmittel (530; 630; 730) für den Drehzapfen (520; 620; 720), um die Plattform (510; 610; 710) in der geraden Position am Rahmen (100) zu fixieren,
**dadurch gekennzeichnet, dass** der Rahmen (100) eine gabelförmige Aufnahme (150; 160; 170) für den Drehzapfen (520; 620; 720) umfasst, und die ersten Verriegelungsmittel (530; 630; 730) angeordnet sind, um den Drehzapfen (520; 620; 720) am Boden dieser Gabel zu blockieren.

2. Elektrischer Verteilerkasten bzw. elektrische Verteilertafel (1) nach vorausgehendem Anspruch, bei dem die gabelförmige Aufnahme (150; 160; 170) nach vorne, also in entgegengesetzter Richtung zum Boden (102) des Rahmens (100) geöffnet ist.

3. Elektrischer Verteilerkasten bzw. elektrische Verteilertafel (1) nach einem der vorausgehenden Ansprüche, bei dem der Drehzapfen (520; 620; 720) und die Aufnahme (150; 160; 170) jeweils eine Fläche haben, die zumindest teilweise drehrollenförmig und abgesehen vom Spiel den gleichen Durchmesser hat.

4. Elektrischer Verteilerkasten bzw. elektrische Verteilertafel (1) nach einem der vorausgehenden Ansprüche, bei dem jede Schienenhalterung (500; 600; 700) zweite Verriegelungsmittel (530; 650; 750) für den Drehzapfen (520; 620; 720) umfasst, um die Plattform (510; 610; 710) in der gekippten Position am Rahmen (100) zu fixieren.

5. Elektrischer Verteilerkasten bzw. elektrische Verteilertafel (1) nach einem der vorausgehenden Ansprüche, bei dem die ersten Verriegelungsmittel (530; 630; 730) eine Einrastlasche umfassen, deren eine Auflageseite (531; 631; 731) sich zum Einhängen am Rahmen (100) eignet.

6. Elektrischer Verteilerkasten bzw. elektrische Verteilertafel (1) nach den Ansprüchen 4 und 5, bei dem die Einrastlasche eine Haltenoppe (532) umfasst, die die Auflageseite (531) stützt und die in ein von mindestens zwei entsprechend am Rahmen (100) vorgesehenen Fenstern (143; 144; 145) eingreifen kann, um die Plattform (510) in gerader oder in gekippter Position am Rahmen (100) zu fixieren.

7. Elektrischer Verteilerkasten bzw. elektrische Verteilertafel (1) nach den Ansprüchen 4 und 5, bei dem jede Schienenhalterung (600; 700) auf mindestens einer Seite einen Außenhaken (651; 751) umfasst, um die Plattform (610; 710) in der gekippten Position am Rahmen (100) fest zu halten.

8. Elektrischer Verteilerkasten bzw. elektrische Verteilertafel (1) nach vorausgehendem Anspruch, bei dem jede Schienenhalterung (600) einen Innenhaken (652) umfasst, der in entgegengesetzte Richtung zum Außenhaken (651) gerichtet ist.

9. Elektrischer Verteilerkasten bzw. elektrische Verteilertafel (1) nach einem der vorausgehenden Ansprüche, bei dem die Auflageseite (731) am Rahmen (100) eingehängt werden kann, wenn sich die Plattform (710) in gekippter Position am Rahmen (100) befindet.

10. Elektrischer Verteilerkasten bzw. elektrische Verteilertafel (1) nach einem der Ansprüche 6 und 9, bei dem die ersten und zweiten Verriegelungsmittel (530) dieselben sind.

11. Elektrischer Verteilerkasten bzw. elektrische Verteilertafel (1) nach Anspruch 8, bei dem sich die ersten und zweiten Verriegelungsmittel (530) unterscheiden.

12. Elektrischer Verteilerkasten bzw. elektrische Verteilertafel (1) nach einem der Ansprüche 4 bis 11, bei dem die gerade und gekippte Position der Plattform (510; 610; 710) hinsichtlich des Winkels um einen Winkel zwischen 15 und 30 Grad, vorzugsweise um 25 Grad, voneinander getrennt sind.

## Claims

1. An electrical panel or box (1) comprising: a frame (100) with a rear face (102) for applying against a wall surface; at least one mounting rail (300) for mounting modular electrical equipment (401); and at least two rail supports (500; 600; 700) each comprising:
· a platform (510; 610; 710) for receiving one end of said mounting rail (300), which platform includes fastener means (511; 611; 711) for fastening the mounting rail (300) along a longitudinal axis (A1);
· a pivot (520; 620; 720) that is situated in register with said platform (510; 610; 710), i.e. behind the mounting rail (300), in the space defined by the two half-planes that extend respectively from the two longitudinal edges of the mounting rail (300) and perpendicularly thereto, and that co-operates with the frame (100) so as to form a simple pivot connection with a pivot axis (A2) that is parallel to the longitudinal axis (A1), enabling said platform (510; 610; 710) to pivot relative to said frame (100) between an upright position, in which it extends substantially parallel to the rear face (102) of the frame (100), and a tilted position; and
· first locking means (530; 630; 730) for locking said pivot (520; 620; 720) so as to fasten said platform (510; 610; 710) in the upright position on the frame (100);
said electrical panel or box being **characterized in that** the frame (100) includes a fork-shaped housing (150; 160; 170) for receiving said pivot (520; 620; 720), and **in that** the first locking means (530; 630; 730) are arranged so as to block said pivot (520; 620; 720) at the bottom of the fork.

2. An electrical panel or box (1) according to the preceding claim, wherein said housing (150; 160; 170) is open towards the front, in the opposite direction to the rear face (102) of the frame (100).

3. An electrical panel or box (1) according to any preceding claim, wherein said pivot (520; 620; 720) and said housing (150; 160; 170) present respective surfaces that are circularly cylindrical, at least in part, and of equal diameter, ignoring clearance.

4. An electrical panel or box (1) according to any preceding claim, wherein each rail support (500; 600; 700) includes second locking means (530; 650; 750) for locking said pivot (520; 620; 720) so as to fasten said platform (510; 610; 710) in the tilted position on the frame (100).

5. An electrical panel or box (1) according to any preceding claim, wherein said first locking means (530; 630; 730) comprise a snap-fastener tab having a bearing face (531, 631, 731) that is adapted to fasten to the frame (100).

6. An electrical panel or box (1) according to claim 4 and claim 5, wherein said snap-fastener tab includes a lug (532) that carries said bearing face (531), and that is adapted to be engaged in one of at least two corresponding windows (143, 144, 145) provided on the frame (100), so as to fasten said platform (510) in its upright position or in its tilted position on the frame (100).

7. An electrical panel or box (1) according to claim 4 and claim 5, wherein, on at least one side, each rail support (600; 700) includes an outer hook (651; 751), so as to hold said platform (610; 710) stationary in its tilted position on the frame (100).

8. An electrical panel or box (1) according to the preceding claim, wherein each rail support (600) includes an inside hook (652) facing in the opposite direction to the outside hook (651).

9. An electrical panel or box (1) according to any preceding claim, wherein said bearing face (731) is adapted to fasten to the frame (100) when said platform (710) is in its tilted position on the frame (100).

10. An electrical panel or box (1) according to claim 6 or claim 9, wherein said first and second locking means (530) are the same locking means.

11. An electrical panel or box (1) according to claim 8, wherein said first and second locking means (530) are distinct.

12. An electrical panel or box (1) according to any one of claims 4 to 11, wherein said upright and tilted positions of said platform (510; 610; 710) are separated angularly by an angle lying in the range 15° to 30°, preferably equal to 25°.
